# EUROPÄISCHE PATENTANMELDUNG

(11) **EP 4 636 366 A1**
(43) Veröffentlichungstag der Anmeldung: **22.10.2025**
(21) Anmeldenummer: 24170997.1
(22) Anmeldetag: 18.04.2024
(51) Int. Cl.: G01G 19/56, A47J 43/04, A47J 43/07

(54) **SYSTEM UND VERFAHREN ZUR VERARBEITUNG VON LEBENSMITTELN ENTSPRECHEND EINER VORGEGEBENEN ZUBEREITUNGSVORSCHRIFT**

(71) Anmelder: Vorwerk & Co. Interholding GmbH, 42275 Wuppertal (DE)
(72) Erfinder: Funken, Marion, 40627 Düsseldorf (DE); Schröder, Florian, 12049 Berlin (DE); Uhlenbrock, Andreas, 81243 München (DE); Thies, Felix, 31303 Burgdorf (DE)
(74) Vertreter: Cohausz & Florack

(57) **Zusammenfassung**

Offenbart wird ein System (100, 200) zur Verarbeitung von Lebensmitteln, mit einem Aufnahmebereich (106, 218) zum Aufnehmen von Lebensmitteln, mit einer Wiegeeinrichtung (108, 216) und mit einer Steuereinrichtung (110, 210), wobei die Steuereinrichtung (110, 210) dazu eingerichtet ist, auf einen Datenspeicher (112, 220) mit Befehlen zum Durchführen mindestens eines Zubereitungsvorgangs entsprechend einer Zubereitungsvorschrift zuzugreifen, und wobei die Wiegeeinrichtung (108, 216) dazu eingerichtet ist, ein in dem Aufnahmebereich (106, 218) aufgenommenes Lebensmittel zu wiegen und ein entsprechendes Messergebnis an die Steuereinrichtung (110, 210) zu übermitteln. Das System (100, 200) ist dadurch gekennzeichnet, dass die Steuereinrichtung (110, 210) dazu eingerichtet ist, das Messergebnis mit mindestens einem Sollwert zu vergleichen, wobei der Sollwert mit einem Toleranzbereich angegeben ist, und dass die Steuereinrichtung (110, 210) dazu eingerichtet ist, einen nächsten Schritt der Zubereitungsvorschrift in Abhängigkeit von dem Vergleichsergebnis automatisch einzuleiten. Ein entsprechendes Verfahren wird ebenfalls offenbart.

## Beschreibung

Die vorliegende Erfindung betrifft ein System zur Verarbeitung von Lebensmitteln, mit einem Aufnahmebereich zum Aufnehmen von Lebensmitteln, mit einer Wiegeeinrichtung und mit einer einen Datenspeicher aufweisenden Steuereinrichtung, wobei auf dem Datenspeicher Befehle zum Durchführen mindestens eines Zubereitungsvorgangs entsprechend einer Zubereitungsvorschrift hinterlegt sind, wobei die Wiegeeinrichtung dazu eingerichtet ist, ein in dem Aufnahmebereich aufgenommenes Lebensmittel zu wiegen und ein entsprechendes Messergebnis an die Steuereinrichtung zu übermitteln. Die vorliegende Erfindung betrifft weiter ein Verfahren zum Betreiben eines Systems zur Verarbeitung von Lebensmitteln entsprechend einer vorgegebenen Zubereitungsvorschrift.

Beim Zubereiten von Lebensmitteln nach einem Rezept oder einer Zubereitungsvorschrift ist es üblich, die Zutaten oder Lebensmittel zu wiegen, um diese dann in vorgegebenen Proportionen miteinander zu verarbeiten. Dabei wird in der Regel ein Sollgewicht angegeben, und die Lebensmittel können durch eine Waage dann gewogen werden, bis das Sollgewicht erreicht wird. Beim Wiegen mit einer traditionellen Waage wird dem Nutzer lediglich ein Messwert angezeigt, und ein exaktes Erreichen des Sollgewichts kann herausfordernd sein.

Weiter bekannt sind Küchengeräte, die ein integriertes Waagemodul aufweisen, mit dem Zutaten oder Lebensmittel nacheinander gewogen werden können, indem diese in einem Aufnahmebereich zugegeben werden. Für einen Zubereitungsvorgang mit mehreren Zutaten werden die Zutaten oder Lebensmittel nacheinander in den Aufnahmebereich eingegeben, so dass diese dann zusammen in einem Aufnahmebereich ggf. vermengt sind. Dabei ist ferner bekannt, dass eine Bestätigung durch den Nutzer über die Art der Zutat bzw. des Lebensmittels bei jeder hinzugefügten Zutat angefordert wird, um dann gemäß der Zubereitungsvorschrift den Zubereitungsvorgang weiter durchzuführen. Eine solche Eingabe kann durch den Nutzer als lästig empfunden werden. Außerdem kann eine solche Bestätigung eine Fehlerquelle werden, beispielsweise eine irrtümliche Bestätigung einer unzutreffenden Lebensmittelart, und ein Herausnehmen einzelner Zutaten ist dann eher schwierig.

Vor diesem Hintergrund liegt der vorliegenden Erfindung die Aufgabe zu Grunde, die Zubereitung von Lebensmitteln zu vereinfachen und nutzerfreundlicher zu gestalten, insbesondere bekannte Küchengeräte und Verfahren zu verbessern.

Die zuvor genannte Aufgabe wird mit einem System zur Verarbeitung von Lebensmitteln, mit einem Aufnahmebereich zum Aufnehmen von Lebensmitteln, mit einer Wiegeeinrichtung und mit einer Steuereinrichtung, wobei die Steuereinrichtung dazu eingerichtet ist, auf einen Datenspeicher mit Befehlen zum Durchführen mindestens eines Zubereitungsvorgangs entsprechend einer Zubereitungsvorschrift zuzugreifen, und wobei die Wiegeeinrichtung dazu eingerichtet ist, ein in dem Aufnahmebereich aufgenommenes Lebensmittel zu wiegen und ein entsprechendes Messergebnis an die Steuereinrichtung zu übermitteln, dadurch gelöst, dass die Steuereinrichtung dazu eingerichtet ist, das Messergebnis mit mindestens einem Sollwert zu vergleichen, wobei der Sollwert mit einem Toleranzbereich angegeben ist, und dass die Steuereinrichtung dazu eingerichtet ist, einen nächsten Schritt der Zubereitungsvorschrift in Abhängigkeit von dem Vergleichsergebnis automatisch einzuleiten.

Die zuvor genannte Aufgabe wird weiterhin gelöst durch ein Verfahren zum Betreiben eines Systems zur Verarbeitung von Lebensmitteln entsprechend einer vorgegebenen Zubereitungsvorschrift, insbesondere eines Systems nach der vorliegenden Offenbarung, bei dem ein Lebensmittel gewogen und ein entsprechendes Messergebnis empfangen wird, bei dem das Messergebnis mit mindestens einem Sollwert verglichen wird, wobei der Sollwert mit einem Toleranzbereich angegeben ist, und bei dem ein nächster Schritt der Zubereitungsvorschrift in Abhängigkeit von dem Vergleichsergebnis automatisch eingeleitet wird.

Mit dem vorgeschlagenen System bzw. Verfahren kann nach dem Wiegen automatisch zu dem nächsten Rezeptschritt gesprungen werden. So kann, wenn eine Zutat mit einem Gewicht, das in einem vorgegebenen, zulässigen Toleranzbereich eingegeben wird, automatisch ohne Eingabe einer gesonderten Bestätigung zum nächsten Rezeptschritt gewechselt werden. Dadurch wird eine Eingabe durch einen Nutzer entbehrlich und der Nutzer muss also nicht mehr selbst durch zusätzliche Interaktion den nächsten Schritt auswählen. Insgesamt wird dadurch das Zubereiten und insbesondere das Wiegen von Zutaten oder Lebensmitteln vereinfacht und die Nutzerfreundlichkeit gesteigert.

Das Messergebnis, das durch die Wiegeeinrichtung an die Steuereinrichtung übermittelt wird, entspricht vorzugsweise einem Istwert für das Gewicht eines oder mehrerer Lebensmittel, die durch den Aufnahmebereich aufgenommen sind.

Das Vergleichen zwischen einem Messergebnis oder Istwert mit dem Sollwert kann durch Ausführen eines Algorithmus erfolgen, der vorzugsweise auf dem Datenspeicher der Steuereinrichtung gespeichert ist.

Der Sollwert ist vorzugsweise ein vorgegebener Wert, dessen Betrag bei dem Wiegen eines Lebensmittels zu erreichen ist. Der Sollwert kann zusammen mit dessen Toleranzbereich einer Lebensmittelart zugeordnet sein.

Die Zubereitungsvorschrift weist mindestens eine Angabe über den Sollwert und den Toleranzbereich für ein zu messenden Gewicht auf. Die Zubereitungsvorschrift kann weitere Informationen aufweisen, beispielsweise einen Zubereitungsparameter oder einen weiteren Sollwert, der einen Zubereitungsvorgang oder einen erzielten Zustand des Lebensmittels betrifft. Ein solcher Zubereitungsparameter kann für eine der folgenden Größen gegeben sein: Lufttemperatur, Backzeit, Ruhezeit, eine Information über eine Uhrzeit, bei der ein Zubereitungsvorgang anfangen oder enden soll, Abstand zu einem Heizelement, Höhe für einen Gargutträger, Luftfeuchtigkeit, Lebensmittelinnentemperatur, Lebensmittelaußentemperatur, Lebensmittelformgebung, Lebensmittelfeuchte, Bräunungsgrad, Lebensmittelgewicht, Lebensmittelvolumen, Packdichte von Lebensmitteleinheiten auf einem Gargutträger oder Weiteres.

Eine Zubereitungsvorschrift entspricht vorzugsweise mindestens einer Zubereitungsanweisung eines Kochrezepts. Eine Zubereitungsanweisung kann zum Beispiel Gartemperaturen enthalten, die für sukzessive Backzeiten eingehalten werden sollen, eine Ruhezeit, eine Zutatenmischung, ein Gewicht, ein Volumen oder Weiteres sein.

Alternativ oder zusätzlich kann die Zubereitungsvorschrift mindestens einer Information über eine Eigenschaft des Systems oder eines Elements das Systems, beispielsweise eines Küchengeräts entsprechen. Eine solche Eigenschaft kann zum Beispiel eine Aufnahmekapazität für den Aufnahmebereich des Systems oder eines Küchengeräts davon, ein vorhersehbarer Verschleiß für das Antriebssystem, eine empfohlene maximale Betriebstemperatur für das weitere Küchengerät oder ein TaraGewicht für einen Vergleich mit einem erfassten Gewicht sein. Eine solche Eigenschaft ist vorzugsweise dem betroffenen Element des Systems eigen und ist vorzugsweise im Voraus durch den Konstrukteur des Systems oder gegebenenfalls eines Elements hiervon vorbestimmt.

Ferner weist die Zubereitungsvorschrift vorzugsweise Informationen über Zubereitungsschritte auf, die bei dem Zubereitungsvorgang durchzuführen sind. Diese Informationen können in Form von Befehlen vorliegen, die dann an zutreffende Elemente oder Bauteile des Systems durch die Steuereinrichtung übermittelt werden. So kann beispielsweise eine Zubereitungsvorschrift computerlesbare Befehle für ein Steuermodul eines Heizelements des Systems aufweisen. Beispiele für einen Zubereitungsschritt sind Wiegen, Tarieren, Mixen, Schneiden, Zerkleinern, Vermengen, Heizen, Kühlen, Ruhen, wobei diese Liste nicht abschließend ist.

Der Toleranzbereich kann durch die Zubereitungsvorschrift definiert bzw. vorgegeben sein. Dabei kann der Toleranzbereich als Tabelle mit Mindest- und mit Höchstwerten vorliegen. Die Tabelle kann einen Toleranzbereich mit einem Mindestwert und mit einem Höchstwert in Abhängigkeit einer Lebensmittelart oder Lebensmittelmenge angeben. Weiterhin kann ein Toleranzbereich als Prozentwert angegeben sein, beispielsweise "plus minus 5 %" des Sollwerts, und für mehrerer, insbesondere für alle Lebensmittelarten oder Zutaten einer Zubereitungsvorschrift vorgegeben sein.

Das System weist ein Wiegeeinrichtung auf, die dazu eingerichtet ist, ein in dem Aufnahmebereich aufgenommenes Lebensmittel zu wiegen und ein entsprechendes Messergebnis an die Steuereinrichtung zu übermitteln. Hierzu ist die Wiegeeinrichtung vorzugsweise über eine Kommunikationsverbindung, beispielsweise eine Kabelverbindung oder eine kabellose Kommunikationsverbindung mit der Steuereinrichtung verbunden.

Die Wiegeeinrichtung kann optische Mittel, beispielsweise eine Kamera, aufweisen. Die optischen Mittel bzw. die Kamera können in der Wiegeeinrichtung integriert sein oder mit dieser verbunden sein. Alternativ oder zusätzlich können die optischen Mittel bzw. die Kamera unterstützend oder zusätzlich zu einem Wiegeelement der Wiegeeinrichtung eingesetzt werden. Ferner kann die Steuereinrichtung dazu eingerichtet sein, anhand von durch die optische Mittel bzw. durch die Kamera erfasste Bilder automatisch zu bestimmen, ob eine Zielmenge für ein Lebensmittel erreicht wurde, und / oder ob ein Wiegeschritt durch einen Nutzer beendet ist. So kann eine Anzahl für eine als Einzelstücke ausgebildete Zutat, beispielsweise Knoblauchzehn oder Zwiebeln, bestimmt werden.

Die Steuereinrichtung ist dazu eingerichtet, auf einen Datenspeicher mit Befehlen zum Durchführen mindestens eines Zubereitungsvorgangs entsprechend einer Zubereitungsvorschrift zuzugreifen. Hierzu kann die Steuereinrichtung den Datenspeicher aufweisen, so dass die Befehle bzw. die Zubereitungsvorschrift lokal auf dem Datenspeicher der Steuereinrichtung hinterlegt sind. Alternativ oder zusätzlich kann der Datenspeicher als zentraler Server ausgebildet sein, und die Steuereinrichtung ist mit dem Datenspeicher über eine Kommunikationsverbindung, beispielsweise über eine Internetverbindung, verbunden. Beispiele für einen Datenspeicher sind eine Festplatte, eine Cloud, ein Server, ein USB-Stick, eine externe Festplatte, ein Tablet, ein Computer, ein Wearable, Rechnereinheiten im Allgemeinen, ein Speichermedium eines privaten Netzwerks, oder Medien, auf denen mindestens eine Zubereitungsvorschrift digital gespeichert werden kann, wobei diese Liste nicht abschließend ist.

Die Steuereinrichtung ist dazu eingerichtet, einen nächsten Schritt der Zubereitungsvorschrift in Abhängigkeit von dem Vergleichsergebnis automatisch einzuleiten. Hierzu kann die Steuereinrichtung dazu eingerichtet sein, einen nächsten Schritt der Zubereitungsvorschrift automatisch einzuleiten, wenn das Vergleichsergebnis ergibt, dass das Messergebnis gleich oder höher als ein Mindestwert des Toleranzbereichs und gleich oder kleiner als ein Höchstwert des Toleranzbereichs ist.

Im Folgenden werden verschiedene Ausführungsformen des Systems und des Verfahrens beschrieben, wobei die einzelnen Ausführungsformen jeweils unabhängig voneinander für das System und das Verfahren gelten. Darüber hinaus können die einzelnen Ausführungsformen beliebig miteinander kombiniert werden.

Bei einer Ausführungsform des Systems ist vorgesehen, dass der mindestens eine Sollwert durch die Zubereitungsvorschrift vorgegeben ist, wobei die Zubereitungsvorschrift den Einsatz von mindestens zwei Lebensmitteln vorsieht, und wobei der Sollwert einem der mindestens zwei Lebensmittel zugeordnet sind, und dass die Steuereinrichtung dazu eingerichtet ist, ein Lebensmittel aus der Zubereitungsvorschrift in Abhängigkeit von dem Vergleichsergebnis automatisch zu erkennen.

Bei einer Ausführungsform des Verfahrens ist vorgesehen, dass der mindestens eine Sollwert durch die Zubereitungsvorschrift vorgegeben ist, wobei die Zubereitungsvorschrift den Einsatz von mindestens zwei Lebensmitteln vorsieht, und wobei der Sollwert einem der mindestens zwei Lebensmittel zugeordnet ist, und dass ein Lebensmittel aus der Zubereitungsvorschrift in Abhängigkeit von dem Vergleichsergebnis automatisch erkannt wird.

Somit kann anhand eines Messergebnisses ein Lebensmittel ohne weiteres erkannt werden, also ohne gesonderte Eingabe durch den Nutzer. Dementsprechend wird dadurch die Nutzerfreundlichkeit des Systems und des Verfahrens gesteigert. Wenn sich die Sollwerte für die unterschiedlichen Zutaten der Zubereitungsvorschrift deutlich unterscheiden, kann ein Erkennen bzw. Zuordnen der jeweiligen erfassten Messergebnisse besonders zuverlässig erreicht werden.

Ferner können durch die automatische Erkennung mehrere Lebensmittel nacheinander einfach und nutzerfreundlich gewogen werden. Dabei können die mehreren Lebensmittel unabhängig von einer Reihenfolge gewogen werden, so dass dem Nutzer ein zusätzlicher Freiheitsgrad bei der Verwendung des Systems bzw. beim Durchführen des Verfahrens gewährleistet wird. Insbesondere kann vorgesehen sein, dass die Zubereitungsvorschrift eine Liste von Lebensmittelarten oder Zutaten vorsieht, wobei jeder Lebensmittelart bzw. Zutat ein Sollwert mit einem Toleranzbereich zugeordnet ist, und dass beim Erkennen eines Lebensmittels dieses als bereits erkannt und gewogen vermerkt wird, und dann ein weiteres Messergebnis erfasst und ausgewertet wird, bis die Liste von Lebensmitteln abgearbeitet ist bzw. bis alle Lebensmittel der Liste als erkannt und gewogen vermerkt sind. Beim Erkennen des letzten Lebensmittels aus der Liste kann dann ein weiterer Schritt der Zubereitungsvorschrift automatisch eingeleitet werden.

In einem Verfahren, bei dem ein Erkennen einer Lebensmittelart bzw. einer Zutat anhand des Mesergebnisses erzielt ist, kann es vorgesehen sind, dass nach dem Vergleich des Messergebnisses mit einem Sollwert oder mit einem Toleranzbereich eine Wartezeit eingeleitet wird. Beispielsweise kann anhand eines Vergleichs des Messergebnisses mit einem Mindestwert und mit einem Höchstwert, die einer Lebensmittelart zugeordnet sind, festgestellt werden, dass das Messergebnis in den durch den Mindestwert und den Höchstwert gebildeten Toleranzbereich fällt. Dann wird eine Wartezeit eingeleitet, beispielsweise in der Größenordnung weniger Sekunden, und ein weiteres Messergebnis erfasst und durch Vergleich mit dem Mindestwert und den Höchstwert ausgewertet. Dadurch kann eine Änderung des Gewichts des eingegebenen Lebensmittels bestimmt und ggf. eine Zuordnung angepasst werden. In einem konkreten Beispiel kann erst ein geringes Gewicht an Mehl erfasst, das aufgrund seines geringen Betrags zunächst als "Hefe" erkannt wird, aber dann durch Erhöhen des Gewichts und entsprechendes erneutes Erfassen nach Ablauf der Wartezeit die Zuordnung zu "Mehl" korrigiert werden.

Alternativ oder zusätzlich kann vorgesehen sein, dass bei Sollwerten mit sich überlappenden Toleranzbereichen Vorschläge für möglicherweise erkannte Lebensmittel angezeigt werden, und dass der nächste Schritt der Zubereitungsvorschrift in Abhängigkeit von dem Vergleichsergebnis und einer den Vorschlägen betreffenden Nutzerauswahl automatisch eingeleitet wird. Somit wird die Erkennung des Lebensmittels, dessen Gewicht erfasst worden ist, erleichtert und die Nutzerfreundlichkeit weiter gesteigert, indem eine Nutzereingabe lediglich bei Bedarf gefordert wird.

Bei einer Ausführungsform des Systems ist vorgesehen, dass der nächste Schritt der Zubereitungsvorschrift, der automatisch eingeleitet wird, ein Warteschritt, ein Verarbeitungsschritt, ein Wiegeschritt oder ein Tarierschritt ist.

Somit kann ein Zubereitungsvorgang einfach und nutzerfreundlich vorangetrieben werden.

Ein Warteschritt kann beispielsweise für den Fall einer deutlichen Überschreitung oder Unterschreitung des Sollwertes, insbesondere für den Fall, dass das Vergleichsergebnis eines Überschreitens eines Höchstwerts des Toleranzbereiches oder eines Unterschreitens des Toleranzbereichs entspricht, eingeleitet werden. Dadurch kann dem Nutzer die Gelegenheit verschafft werden, das Gewichts des in dem Aufnahmebereich aufgenommenen Lebensmittels an den Sollwert anzupassen, beispielsweise indem ein im Überfluss eingegebenes Lebensmittel aus dem Aufnahmebereich teilweise herausgenommen wird, oder indem das Lebensmittel weiter hinzugefügt wird, um ein Messergebnis innerhalb des Toleranzbereichs zu erreichen. Die Dauer des Warteschrittes kann vordefiniert sein und / oder angepasst werden, beispielsweise anhand eines gespeicherten Nutzerprofils oder einer gespeicherten Nutzungshistorie des Systems.

Beispiele für einen Verarbeitungsschritt sind Mixen, Schneiden, Zerkleinern, Vermengen, Heizen, Kühlen, Ruhen, wobei diese Liste nicht abschließend ist.

Ein Tarierschritt kann eingeleitet werden, beispielsweise wenn das Vergleichsergebnis ergibt, dass ein Lebensmittel mit einem Gewicht innerhalb des Toleranzeberichs vorliegt, und dass der Zubereitungsvorschrift nach einem weiteren Lebensmittel gewogen werden soll. So können mehrere Lebensmittel nacheinander in den Aufnahmebereich eingegeben und gewogen werden, ohne dass diese zwischen den Wiegevorgängen oder Wiegeschritten herausgenommen werden.

Bei einer Ausführungsform des Systems ist vorgesehen, dass der Toleranzbereich mit einem Mindestwert und mit einem Höchstwert angegeben ist, dass die Steuereinrichtung dazu eingerichtet ist, den Mindestwert und den Höchstwert jeweils mit einem Abstand relativ zu dem Sollwert automatisch zu bestimmen, und dass der Abstand von dem Betrag des Sollwerts abhängig ist.

Dadurch kann die Genauigkeit, mit der das Lebensmittel zu wiegen ist, an den Betrag des Sollwerts angepasst werden. Beispielsweise bei einem Sollwert mit einer Größenordnung im Milligramm Bereich kann es zum Beispiel durchaus relevant sein, eine höhere Genauigkeit beim Wiegen zu beachten als bei einem Sollwert mit einer Größenordnung im Kilogramm Bereich.

Der Mindestwert und der Höchstwert können durch eine prozentuale Angabe vorgegeben sein. Zum Beispiel bei einem Toleranzbereich von plus minus 5 %, entspricht der Mindestwert des Toleranzbereichs dem Betrag des Sollwerts minus fünf Prozent des Betrags des Sollwerts und der Höchstwert des Toleranzbereichs entspricht dem Betrag des Sollwerts plus fünf Prozent des Betrags des Sollwerts.

Es kann vorgesehen sein, dass der Toleranzbereich bzw. der Mindestwert und der Höchstwert mit dem Skalieren des Sollwerts kontinuierlich angepasst werden, beispielsweise durch Anwenden eines gleichbleibenden Prozentsatzes. So ist zum Beispiel ein Toleranzbereich von plus minus 5 % bei einem Sollwert von 100 Gramm absolut betrachtet kleiner als ein Toleranzbereich von plus minus 5 % bei einem Sollwert von 1 Kilogramm. Alternativ oder zusätzlich kann der Abstand zwischen dem Mindestwert und dem Sollwert und / oder der Abstand zwischen dem Höchstwert und dem Sollwert in einer kontinuierlichen Weise an den Betrag des Sollwerts angepasst werden.

Alternativ oder zusätzlich kann eine Angabe für einen Toleranzbereich in einer diskreten bzw. abgestuften Weise an den Betrag des Sollwerts angepasst werden. So kann beispielsweise ein Toleranzbereich von plus minus 5 % für Sollwerte, die im Bereich von 50 bis 100 Gramm liegen, und von plus minus 10 % für Sollwerte, die im Bereich von 200 bis 500 Gramm liegen, angegeben sein.

Alternativ oder zusätzlich können der Toleranzbereich bzw. der Abstand zwischen dem Mindestwert und dem Sollwert und / oder der Abstand zwischen dem Höchstwert und dem Sollwert als absolute Werte angegeben sein. Auch hier kann der Toleranzbereich an den Betrag des Sollwerts kontinuierlich oder diskret angepasst werden. Beispielsweise kann ein Abstand von 5 Gramm zwischen dem Mindestwert und dem Sollwert vorgegeben sein, wenn der Sollwert einen Betrag im Bereich von 50 bis 100 Gramm aufweist.

Somit kann der Toleranzbereich einfach bestimmt und gleichzeitig eine sinnvolle Größenordnung für den Toleranzbereich gewährleistet werden.

Bei einer Ausführungsform des Systems ist vorgesehen, dass die Steuereinrichtung dazu eingerichtet ist, den Mindestwert mit einem ersten Abstand relativ zu einem Sollwert und den Höchstwert mit einem zweiten Abstand relativ zum Sollwert automatisch zu bestimmen, wobei der erste Abstand und der zweite Abstand unterschiedliche Beträge aufweisen.

Somit wird ein Toleranzbereich angegeben, der relativ zum Sollwert asymmetrisch verteilt ist, bzw. der Sollwert entspricht nicht dem Mittelwert des Toleranzbereichs. Dabei dann der erste Abstand geringer als der zweite Abstand sein oder der erste Abstand größer als der zweite Abstand sein. Somit kann beispielsweise eine Nutzerpräferenz abgebildet werden, entsprechend deren ein Nutzer die Tendenz hat, lieber mehr als einen vorgegeben Wert einzugeben, als ein im Vergleich zum Sollwert geringeres Gewicht in Kauf zu nehmen, oder umgekehrt.

Bei einer Ausführungsform des Verfahrens ist vorgesehen, dass der Toleranzbereich automatisch bestimmt wird, indem ein Mindestwert mit einem ersten Abstand relativ zu dem Sollwert und ein Höchstwert mit einem zweiten Abstand relativ zu dem Sollwert automatisch bestimmt werden, wobei der erste Abstand und der zweite Abstand gleich sind, oder dass der Toleranzbereich automatisch bestimmt wird, indem ein Mindestwert mit einem ersten Abstand relativ zu dem Sollwert und ein Höchstwert mit einem zweiten Abstand relativ zu dem Sollwert automatisch bestimmt werden, wobei der erste Abstand und der zweite Abstand unterschiedliche Beträge aufweisen.

Der Toleranzbereich bzw. der Mindestwert und der Höchstwert können je nach Lebensmittelart, der sie zugeordnet sind, unterschiedlich angegeben sein. So kann beispielsweise ein Toleranzbereich für ein Lebensmittel, das besonders geschmacksintensiv ist, relativ eng um den Sollwert ausgewählt werden. Dadurch lässt die sich Gelinggarantie des Zubereitungsvorgangs und die Wiederholbarkeit des Zubereitungsergebnisses steigern.

Bei einer Ausführungsform des Verfahrens ist vorgesehen, dass der Mindestwert und der Höchstwert in Abhängigkeit von dem Betrag des Sollwerts, in Abhängigkeit von Erfahrungswerten und / oder in Abhängigkeit von Nutzervorlieben automatisch bestimmt werden.

Bei einer entsprechenden Ausführungsform des Systems ist vorgesehen, dass die Steuereinrichtung dazu eingerichtet ist, den Mindestwert und den Höchstwert in Abhängigkeit von Erfahrungswerten und / oder in Abhängigkeit von Nutzervorlieben automatisch zu bestimmen.

Bei der automatischen Bestimmung des Toleranzbereichs bzw. des Mindestwerts und des Höchstwertes können Informationen aus einem Nutzerprofil oder einer Nutzungshistorie des Systems herangezogen werden. So kann beispielsweise ein Nutzerverhalten berücksichtigt werden, um einen Abstand zwischen Mindestwert und Sollwert oder einen Abstand zwischen Höchstwert und Sollwert zu bestimmen. Dabei kann das Nutzerverhalten beispielsweise eine Tendenz sein, einen Sollwert regelmäßig um mehr als 10 % zu überschreiten, oder eine Gewohnheit, regelmäßig 20 % weniger Zucker als vorgeschlagen einzusetzen. Derartige Nutzerverhalten, -vorlieben, -profile oder Nutzungshistorie können im Voraus erfasst und gespeichert worden sein, beispielsweise auf dem Datenspeicher. Das Speichern kann lokal auf einem Datenspeicher der Steuereinrichtung, alternativ oder zusätzlich auf einem externen Server erfolgen. Die Erfassung kann durch Empfangen einer Nutzerbestätigung für ein gemessenen Gewicht erfolgen.

Ein Nutzerverhalten kann durch Sammeln von Informationen oder Statistiken über das Verhalten mehrerer Nutzer entstehen, alternativ durch Erfassen von Informationen über das Verhalten durch einen einzelnen Nutzer oder über die Nutzung eines einzelnen Systems entstehen.

Alternativ oder zusätzlich kann der Toleranzbereich bzw. der Mindestwert und der Höchstwert manuell durch Nutzereingabe festgelegt werden.

Bei einer Ausführungsform des Systems ist vorgesehen, dass die Steuereinrichtung dazu eingerichtet ist, mehrere, nacheinander durch die Wiegeeinrichtung erfasste und übermittelte Messergebnisse jeweils mit dem Mindestwert und mit dem Höchstwert zu vergleichen, und dass die Steuereinrichtung dazu eingerichtet ist, für das automatische Einleiten des nächsten Schritts der Zubereitungsvorschrift die jeweiligen Vergleichsergebnisse zu berücksichtigen.

Bei einer entsprechenden Ausführungsform des Verfahrens ist vorgesehen, dass mehrere, nacheinander durch die Wiegeeinrichtung erfasste und übermittelte Messergebnisse jeweils mit dem Mindestwert und mit dem Höchstwert zu vergleichen, und dass für das automatische Einleiten des nächsten Schritts der Zubereitungsvorschrift die jeweiligen Vergleichsergebnisse berücksichtigt werden.

Dadurch kann eine Änderung des Gewichts, das in durch den Aufnahmebereich aufgenommen ist, erfasst werden. Somit kann ein Einhalten des Toleranzbereichs bzw. eine Abweichung relativ zum Toleranzbereich über die Zeit beobachtet werden und ggf. der nächste Schritt der Zubereitungsvorschrift erst eingeleitet werden, wenn beispielsweise ein stabiles Messergebnis über die Zeit festgestellt wird.

Bei einer Ausführungsform des Systems ist vorgesehen, dass die Steuereinrichtung dazu eingerichtet ist, wenn das Vergleichsergebnis einem Überschreiten des Sollwerts über den Toleranzbereich hinaus, insbesondere einem Überschreiten des Höchstwerts, entspricht, automatisch einen Warteschritt mit einer vorgegebenen Wartezeit einzuleiten, und nach Ablauf der vorgegebenen Wartezeit ein dann durch die Wiegeeinrichtung weiteres übermitteltes Messergebnis mit dem Sollwert zu vergleichen und einen nächsten Schritt des Zubereitungsvorgangs in Abhängigkeit von dem weiteren Vergleichsergebnis automatisch einzuleiten, und / oder dass die Steuereinrichtung dazu eingerichtet ist, wenn das Vergleichsergebnis einem Unterschreiten des Sollwerts über den Toleranzbereich hinaus, insbesondere einem Unterschreiten des Mindestwerts, entspricht, automatisch einen Warteschritt mit einer vorgegebenen Wartezeit einzuleiten, und nach Ablauf der vorgegebenen Wartezeit ein dann durch die Wiegeeinrichtung weiteres übermitteltes Messergebnis mit dem Sollwert zu vergleichen und einen nächsten Schritt des Zubereitungsvorgangs in Abhängigkeit von dem weiteren Vergleichsergebnis automatisch einzuleiten.

Bei einer Ausführungsform des Verfahrens ist vorgesehen, dass, wenn das Vergleichsergebnis einem Überschreiten des Sollwerts über den Toleranzbereich hinaus, insbesondere einem Überschreiten des Höchstwerts, entspricht, ein Warteschritt mit einer vorgegebenen Wartezeit automatisch eingeleitet wird, und nach Ablauf der vorgegebenen Wartezeit ein dann übermitteltes weiteres Messergebnis mit dem Sollwert verglichen wird und ein nächster Schritt der Zubereitungsvorschrift in Abhängigkeit von dem weiteren Vergleichsergebnis automatisch eingeleitet wird, und / oder dass, wenn das Vergleichsergebnis einem Unterschreiten des Sollwerts über den Toleranzbereich hinaus, insbesondere einem Unterschreiten des Mindestwerts, entspricht, ein Warteschritt mit einer vorgegebenen Wartezeit automatisch eingeleitet wird, und nach Ablauf der vorgegebenen Wartezeit ein dann übermitteltes weiteres Messergebnis mit dem Sollwert verglichen wird und ein nächster Schritt der Zubereitungsvorschrift in Abhängigkeit von dem weiteren Vergleichsergebnis automatisch eingeleitet wird.

Somit wird einem Nutzer die Gelegenheit verschafft, ein Verfehlen des Sollwerts jenseits des Toleranzbereichs zu korrigieren, indem zum Beispiel das gewogene Lebensmittel aus dem Aufnahmebereich anteilig herausgenommen wird oder ergänzt wird.

Die Dauer der Wartezeit kann vordefiniert sein. Sollte nach Ablauf der Wartezeit keine Änderung des Gewichts festgestellt werden, zum Beispiel indem das weitere Vergleichsergebnis ähnlich wie das erste Vergleichsergebnis ausfällt, kann eine Aufforderung für einen Nutzer zur Bestätigung des weiteren Messergebnisses oder eine Anfrage, ob der nächste Schritt eingeleitet werden soll, ausgegeben werden, und erst nach Erfassen einer positiven Bestätigung oder positiven Rückmeldung der nächste Schritt der Zubereitungsvorschrift eingeleitet werden.

Alternativ oder zusätzlich kann nach Ablauf der Wartezeit und weiterem Feststellen eines Überschreitens oder Unterschreitens des Toleranzbereichs ein weiterer Warteschritt eingeleitet werden. Dies kann wiederholt werden, bis zum Feststellen eines Messergebnisses, das in den Toleranzbereich fällt.

Alternativ oder zusätzlich kann die Wartezeit durch Erfassen einer Änderung des Gewichts beendet werden, zum Beispiel indem sich das weitere Vergleichsergebnis von dem ersten Vergleichsergebnis unterscheidet, oder indem sich das erste Messergebnis von dem weiteren Messergebnis unterscheidet.

Bei einer Ausführungsform des Systems ist vorgesehen, dass eine Benutzerschnittstelle vorgesehen ist, wobei die Benutzerschnittstelle dazu eingerichtet ist, ein Signal in Abhängigkeit von dem Vergleichsergebnis auszugeben.

Dadurch kann einem Nutzer automatisch signalisiert werden, dass ein Sollwert erreicht, bald erreicht oder überschritten ist. Die Benutzerschnittstelle kann dazu eingerichtet sein, ein akustisches Signal oder ein optisches Signal auszugeben und bietet somit dem Nutzer eine Unterstützung beim Wiegen von Lebensmitteln.

Die Benutzerschnittstelle kann dazu eingerichtet sein, unterschiedliche Signale auszugeben, je nachdem, ob das Vergleichsergebnis einem Treffen oder Verfehlen des Toleranzbereichs entspricht, bzw. ob das Messergebnis innerhalb oder außerhalb des Toleranzbereichs fällt. Alternativ oder zusätzlich kann die Benutzerschnittstelle dazu eingerichtet sein, unterschiedliche Signale in Abhängigkeit vom Abstand des Messergebnisses zum Sollwert und / oder zum Mindestwert und / oder zum Höchstwert auszugeben.

Alternativ oder zusätzlich kann die Benutzerschnittstelle dazu eingerichtet sein, sowohl ein optisches Signal als auch ein akustisches Signal in Abhängigkeit von dem Vergleichsergebnis auszugeben.

Bei einer Ausführungsform des Systems ist vorgesehen, dass die Steuereinrichtung dazu eingerichtet ist, einen nächsten Schritt der Zubereitungsvorschrift automatisch einzuleiten und das Messergebnis zusammen mit einer Angabe über die Lebensmittelart des gewogenen Lebensmittels zu hinterlegen, wenn das Vergleichsergebnis ergibt, dass das Messergebnis gleich oder höher als der Mindestwert und gleich oder kleiner als der Höchstwert ist.

Dadurch kann der Zubereitungsvorgang zunächst weiter durchgeführt werden, indem das Lebensmittel beispielsweise erst verarbeitet wird, und ggf. später noch das Lebensmittel, das gewogen worden ist, zusätzlich ergänzt werden, und dabei eine Information über das dann insgesamt verwendete Gewicht für dieses Lebensmittel zur Verfügung stellen. Ein weiteres Anwendungsbeispiel ist ein Abrufen und Verwenden des hinterlegten Messergebnisses bei einem späteren Tariervorgangs, insbesondere wenn mehrere Lebensmittel nacheinander in einem selben Aufnahmebereich gewogen werden.

Weiterhin kann durch Hinterlegen des Messergebnisses ein Zubereitungsvorgang und insbesondere ein Wiegeschritt beliebig unterbrochen werden, und später weiter durchgeführt werden.

Das Messergebnis kann für die Dauer eines oder mehrerer Schritte der Zubereitungsvorschrift hinterlegt werden. Alternativ oder zusätzlich kann das Messergebnis mindestens für die Dauer der Durchführung eines gesamten Zubereitungsvorgangs, ggf. langfristig für einen späteren, wiederholten Zubereitungsvorgang mit Anpassung der Zubereitungsvorschrift anhand der tatsächlichen verwendeten Werte bzw. Messergebnisse, hinterlegt werden.

Das Messergebnis kann zusammen mit einer Angabe über die Lebensmittelart des gewogenen Lebensmittels hinterlegt werden, sobald die Lebensmittelart erkannt oder beispielsweise durch eine Nutzereingabe bestätigt worden ist. Das hinterlegte Messergebnis kann abgerufen werden, beispielsweise beim Erfassen einer Nutzereingabe betreffend die Lebensmittelart, mit der das Messergebnis zusammen hinterlegt worden ist, und dann auch angezeigt werden. Weiter kann das hinterlegte Messergebnis für einen Tariervorgang oder Tarierschritt abgerufen werden. Dabei kann das Messergebnis als Taragewicht oder Referenzwert verwendet werden, und ein weiteres Messergebnis aufaddiert werden, um ein Gesamtgewicht zu bestimmen.

Bei einer Ausführungsform des Systems ist vorgesehen, dass die Steuereinrichtung Teil eines ersten Küchengeräts ist, und dass der Aufnahmebereich zum Aufnehmen von Lebensmitteln und die Wiegeeinrichtung Teile eines zweiten Küchengeräts sind.

Somit können mehrere Küchengeräte zusammen als System verwendet werden, wobei das erste Küchengerät eine Wiegefunktion aufweist und das zweite Küchengerät ausreichend Rechenleistung für das Ausführen eines Algorithmus und Durchführen eines Verfahrens gemäß der vorliegenden Offenbarung aufweist.

Ein Küchengerät kann zum Erfassen von Eigenschaften von Lebensmitteln und / oder zum Verarbeiten von rohen oder halbfertigen Lebensmittelprodukten ausgebildet sein. Ein Beispiel für ein derartiges Küchengerät weist ein Grundgerät auf, mit dem separate Funktionsteile zusammenwirken, um je nach erzieltem Gericht, Getränk oder Ähnliches ein Lebensmittel zu verarbeiten. Funktionsteile werden in der Regel durch Küchengeräteanbieter als Zubehörteile verkauft, zum Beispiel als Kochgefäß, Gargefäß, Deckel, Schneide- oder Rühraufsatz. Im Allgemeinen weisen das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachter Schnittstellen ein Antrieb eines beweglichen Bauteils des Zubehörteils durch einen in dem Grundgerät angeordneten Elektromotor erfolgen. Das erste Küchengerät und das weitere Küchengerät weisen vorzugsweise jeweils eine Zubereitungseinrichtung zum Verändern des Zustands eines Lebensmittels auf. Hierzu kann die Zubereitungseinrichtung zum Beispiel zum Heizen, zum Kühlen, zum Zerkleinern, zum Vermischen oder Weiteres eingerichtet sein.

Weitere Beispiele für ein Küchengerät sind ein Backofen, ein Mikrowellenofen, ein Kochmixer, ein Standmixer, eine Waage, wobei diese Liste nicht abschließend ist.

Vorzugsweise ist das erste Küchengerät mit dem zweiten Küchengerät über eine Kommunikationsverbindung, insbesondere eine zur Übermittlung des Messergebnisses und ggf. von Befehlen zum Durchführen eines Schrittes der Zubereitungsvorschrift eingerichtete Kommunikationsverbindung verbunden. Die Kommunikationsverbindung kann eine Kabelverbindung sein, alternativ oder zusätzlich eine kabellose Verbindung, beispielsweise basierend auf einer WiFi-, NFC- oder Bluetooth-Technologie.

Bei einer Ausführungsform des Verfahrens ist vorgesehen, dass bei dem automatischen Einleiten des nächsten Schrittes der Zubereitungsvorschrift in Abhängigkeit von dem Vergleichsergebnis keine Nutzereingabe aufgefordert wird.

Bei einer entsprechenden Ausführungsform des Systems ist vorgesehen, dass die Steuereinrichtung dazu eingerichtet ist, den nächsten Schritt der Zubereitungsvorschrift in Abhängigkeit von dem Vergleichsergebnis ohne Nutzereingabe einzuleiten.

Dadurch kann die Nutzerfreundlichkeit weiter gesteigert werden. Daneben kann die Bedienung des Systems vereinfacht werden, indem eine Nutzereingabe beispielsweise an einem berührungsempfindlichen Bildschirm mit fettigen oder nassen Findern entbehrlich wird.

Weitere Merkmale und Vorteile des Systems und des Verfahrens ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel für ein System zur Verarbeitung von Lebensmitteln;
- Fig. 2: ein zweites Ausführungsbeispiel für ein System zur Verarbeitung von Lebensmitteln;
- Fig. 3: ein erstes Ausführungsbeispiel für ein Verfahren zum Betreiben eines Systems zur Verarbeitung von Lebensmitteln entsprechend einer vorgegebenen Zubereitungsvorschrift;
- Fig. 4: ein zweites Ausführungsbeispiel für ein Verfahren zum Betreiben eines Systems zur Verarbeitung von Lebensmitteln entsprechend einer vorgegebenen Zubereitungsvorschrift; und
- Fig. 5: ein drittes Ausführungsbeispiel für ein Verfahren zum Betreiben eines Systems zur Verarbeitung von Lebensmitteln entsprechend einer vorgegebenen Zubereitungsvorschrift.

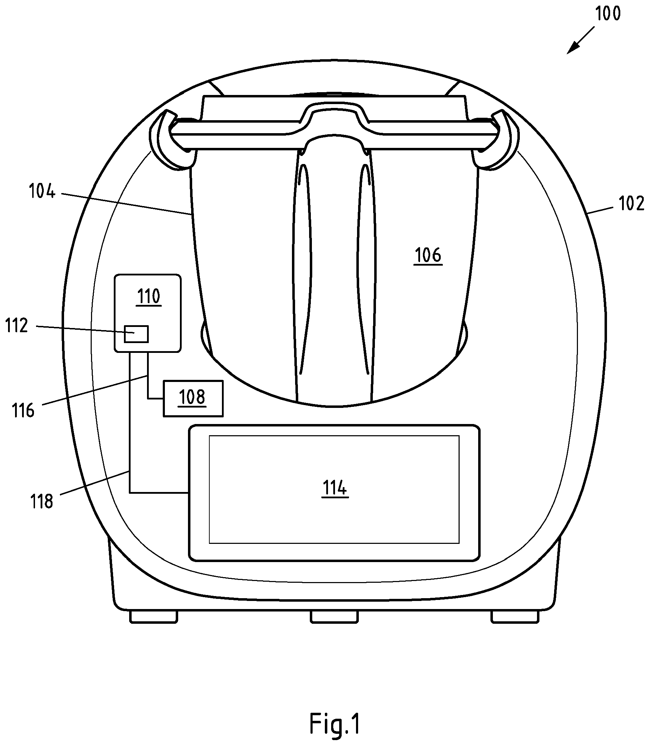

Fig. 1 zeigt ein erstes Ausführungsbeispiel für ein System 100 zur Verarbeitung von Lebensmitteln. Das System 100 weist ein Grundgerät 102 und einen Aufnahmebehälter 104 mit einem Aufnahmebereich 106 zum Aufnehmen von Lebensmitteln auf. In dem Grundgerät 102 sind eine Wiegeeinrichtung 108 und eine Steuereinrichtung 110 mit einem Datenspeicher 112 integriert. Ferner weist das Grundgerät 102 eine Benutzerschnittstelle 114 in Form eines berührungsempfindlichen Bildschirms auf.

Die Wiegeeinrichtung 108, die Steuereinrichtung 110 und die Benutzerschnittstelle 114 sind jeweils über Kommunikationsverbindungen 116, 118 verbunden, hier als Kabelverbindungen dargestellt.

Auf dem Datenspeicher 112 sind Zubereitungsvorschriften und entsprechende Befehle hinterlegt. Die Befehle sind dazu ausgelegt, wenn durch einen Prozessor der Steuereinrichtung 110 ausgeführt, Elemente und / oder Bauteile des Systems 100, wie zum Beispiel ein Zerkleinerungselement oder die Wiegeeinrichtung 108 dahingehend zu steuern, dass ein Zubereitungsvorgang entsprechend einer der Zubereitungsvorschriften durchgeführt wird. Die Zubereitungsvorschriften bzw. Befehle sind durch die Steuereinrichtung 110 abrufbar und können über die Benutzerschnittstelle 114 ausgewählt werden können. Hierzu ist die Benutzerschnittelle dafür eingerichtet, die Zubereitungsvorschriften anzuzeigen und eine Nutzereingabe zu erfassen und an die Steuereinrichtung 110 weiterzuleiten.

Die Wiegeeinrichtung 108 ist dazu eingerichtet, ein in dem Aufnahmebereich 106 aufgenommenes Lebensmittel zu wiegen und ein entsprechendes Messergebnis an die Steuereinrichtung 110 zu übermitteln.

Die Steuereinrichtung 110 ist dazu eingerichtet, das Messergebnis mit mindestens einem Sollwert zu vergleichen, wobei der Sollwert mit einem Toleranzbereich angegeben ist, und einen nächsten Schritt der Zubereitungsvorschrift in Abhängigkeit von dem Vergleichsergebnis automatisch einzuleiten.

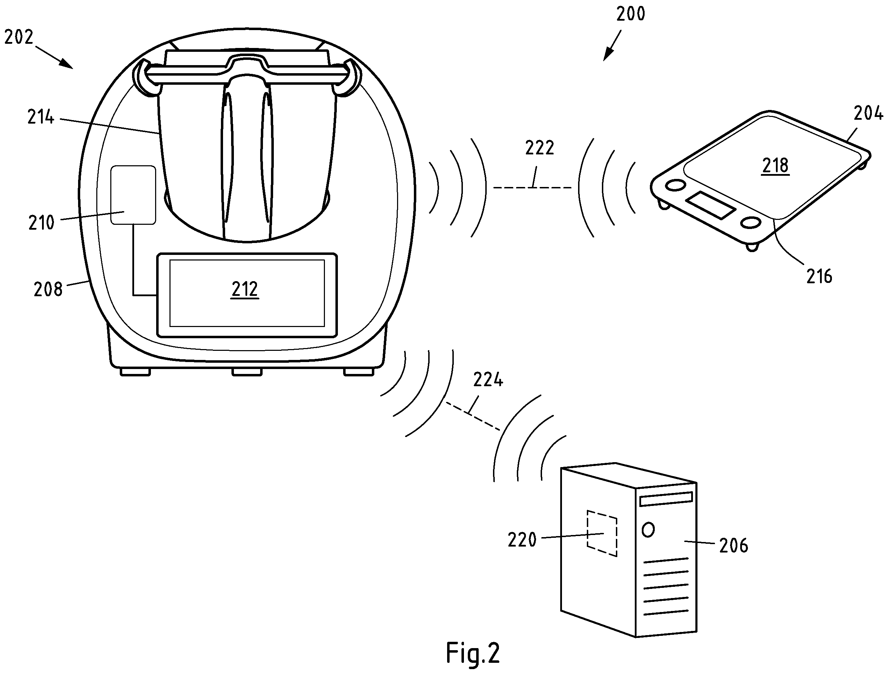

Fig. 2 zeigt ein zweites Ausführungsbeispiel für ein System 200 zur Verarbeitung von Lebensmitteln. Das System 200 weist ein erstes Küchengerät 202, ein zweites Küchengerät 204 und einen Server 206 auf. Das erste Küchengerät 202 weist ein Grundgerät 208 mit einer Steuereinrichtung 210 und einer Benutzerschnittstelle 212 und einem Aufnahmebehälter 214 auf. Das zweite Küchengerät 204 weist eine Wiegeeinrichtung 216 und einen Aufnahmebereich 218 zum Aufnehmen von Lebensmitteln auf. Der Server 206 weist einen Datenspeicher 220 mit Befehlen zum Durchführen mindestens eines Zubereitungsvorgangs entsprechend einer Zubereitungsvorschrift auf.

Das erste Küchengerät 202 ist über eine erste Kommunikationsverbindung 222 mit dem zweiten Küchengerät 204 verbunden. Die erste Kommunikationsverbindung 222 ist kabellos, beispielsweise als Bluetooth-Verbindung ausgebildet. Hierzu können das Grundgerät 208 des ersten Küchengeräts 202 und das zweite Küchengerät 204 jeweils ein Bluetooth basiertes Kommunikationsmodul aufweisen.

Das erste Küchengerät 202 ist über eine zweite Kommunikationsverbindung 224 mit dem Server 206 verbunden, beispielsweise über eine WiFi-basierte Internetverbindung. Über die zweite Kommunikationsverbindung 224 kann die Steuereinrichtung 210 auf den Datenspeicher 220 mit den Zubereitungsvorschriften und entsprechenden Befehlen zugreifen.

Das zweite Küchengerät 204 bzw. die Wiegeeinrichtung 216 des zweiten Küchengeräts 204 ist dazu eingerichtet, ein in dem Aufnahmebereich 218 des zweiten Küchengeräts 204 aufgenommenes Lebensmittel zu wiegen und ein entsprechendes Messergebnis über die erste Kommunikationsverbindung 222 an die Steuereinrichtung 210 zu übermitteln.

Die Steuereinrichtung 210 ist dazu eingerichtet, das Messergebnis mit mindestens einem Sollwert aus einer Zubereitungsvorschrift, die auf dem Datenspeicher 220 des Servers 206 hinterlegt ist, zu vergleichen, wobei der Sollwert mit einem Toleranzbereich angegeben ist, und einen nächsten Schritt der Zubereitungsvorschrift in Abhängigkeit von dem Vergleichsergebnis automatisch einzuleiten. Dabei kann der nächste Schritt ein Wiegen eines weiteren Lebensmittels sein, wobei eine Aufforderung, das weitere Lebensmittel in dem Aufnahmebereich 218 des zweiten Küchengeräts 204 zu platzieren, durch die Benutzerschnittstelle 212 des ersten Küchengeräts 202 angezeigt wird.

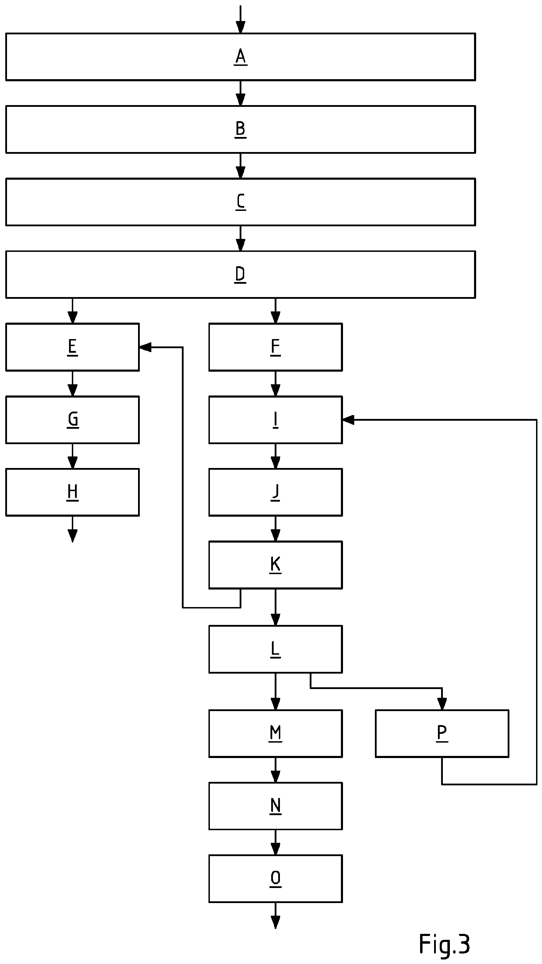

Fig. 3 zeigt ein erstes Ausführungsbeispiel für ein Verfahren zum Betreiben eines Systems zur Verarbeitung von Lebensmitteln entsprechend einer vorgegebenen Zubereitungsvorschrift.

Bei einem Schritt A wird eine Zubereitungsvorschrift mit einer Liste an Sollwerten und entsprechenden Toleranzbereichen abgerufen, wobei die Sollwerte und Toleranzbereiche jeweils einer Lebensmittelart, beispielsweise "Tomaten", "Milch" oder "Mehl" zugeordnet sind. Die jeweiligen Toleranzbereiche sind mit einem Mindestwert und mit einem Höchstwert angegeben.

Bei einem Schritt B wird ein Gewicht erfasst und als Messergebnis übermittelt. Der SchrittA und der Schritt B können zeitgleich, parallel oder zeitverschoben bzw. nacheinander durchgeführt werden.

In einem Schritt C wird das Messergebnis empfangen oder abgerufen und mit den einzelnen Sollwerten und Toleranzbereichen aus der Zubereitungsvorschrift verglichen.

In einem Schritt D werden die einzelnen Vergleichsergebnisse ausgewertet. Basierend auf der Auswertung wird der Sollwert, mit dem das Messergebnis den geringsten Abstand hat, bestimmt und die Lebensmittelart, mit der der bestimmte Sollwert zugeordnet ist, als für das Lebensmittel, dessen Gewicht dem Messergebnis entspricht, erkannte Lebensmittelart ausgegeben.

Ebenfalls auf der Grundlage der Auswertung der Vergleichsergebnisse wird bestimmt, ob das Messergebnis den Mindestwert des Toleranzbereichs für den bestimmten Sollwert überschreitet und den Höchstwert des Toleranzbereichs für den bestimmten Sollwert unterschreitet (Schritt E), oder ob das Messergebnis entweder den Mindestwert des Toleranzbereichs für den bestimmten Sollwert unterschreitet oder ob das Messergebnis den Höchstwert des Toleranzbereichs für den bestimmten Sollwert überschreitet (Schritt F).

Wenn das Messergebnis den Mindestwert des Toleranzbereichs für den bestimmten Sollwert überschreitet und den Höchstwert des Toleranzbereichs für den bestimmten Sollwert unterschreitet (Schritt E) bzw. wenn das Messergebnis in den Toleranzbereich fällt, dann wird das Messergebnis zusammen mit der Information über die erkannte Lebensmittelart gespeichert (Schritt G), ein nächster Schritt der Zubereitungsvorschrift automatisch eingeleitet (Schritt H), wobei keine Nutzereingabe aufgefordert wird.

Wenn das Vergleichsergebnis einem Unterschreiten des Mindestwerts oder einem Überschreiten des Höchstwerts entspricht (Schritt F), dann wird ein Warteschritt (Schritt I) mit einer vorgegebenen Wartezeit automatisch eingeleitet. Im Laufe der Wartezeit wird ein weiteres Gewicht erfasst und ein entsprechendes, weiteres Messergebnis übermittelt (Schritt J). Nach Ablauf der Wartezeit oder nach Übermitteln des Messergebnisses wird das Messergebnis in einem Schritt K empfangen oder abgerufen und ausgewertet (Schritt K), indem das Messergebnis mit dem Mindestwert und/oder mit dem Höchstwert des im Schritt D bestimmten Sollwerts verglichen wird.

Wenn die Auswertung ergibt, dass das weitere Messergebnis den Mindestwert des Toleranzbereichs für den bestimmten Sollwert überschreitet und den Höchstwert des Toleranzbereichs für den bestimmten Sollwert unterschreitet bzw. wenn das Messergebnis in den Toleranzbereich fällt, werden die Schritte E bis H durchgeführt.

Wenn die Auswertung ein Unterschreiten des Mindestwerts oder ein Überschreiten des Höchstwerts ergibt, wird dann im Schritt L eine Aufforderung angezeigt, das Messergebnis als erwünschtes Gewicht zu bestätigen oder abzulehnen.

Wird eine Bestätigung erfasst (Schritt M), dann werden das Messergebnis gespeichert (Schritt N) und ggf. weitere Sollwerte und Toleranzwerte für anderweitige Lebensmittelarten aus der Zubereitungsvorschrift skaliert. Anschließend oder gleichzeitig wird ein nächster Schritt der Zubereitungsvorschrift automatisch eingeleitet (Schritt O).

Wird als Reaktion auf die Aufforderung aus dem Schritt L eine Ablehnung erfasst (Schritt P), dann wird das Verfahren ab den Schritt I wieder durchgeführt.

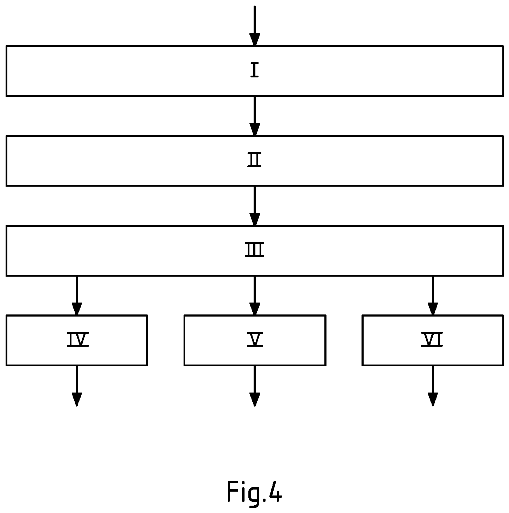

Fig. 4 zeigt ein zweites Ausführungsbeispiel für ein Verfahren zum Betreiben eines Systems zur Verarbeitung von Lebensmitteln entsprechend einer vorgegebenen Zubereitungsvorschrift.

In einem Schritt I wird eine Zubereitungsvorschrift mit Befehlen zum Durchführen eines Zubereitungsvorgangs, beispielsweise zum Zubereiten eines Brotteigs abgerufen. Die Zubereitungsvorschrift weist Sollwerte für Mehl, Wasser, Salz und Hefe auf. Jeder Sollwert ist mit einem ursprünglichen Toleranzbereich von plus minus 5 % angegeben. So weist der ursprüngliche Toleranzbereich einen ursprünglichen Mindestwert bei 95 % des Betrags des zutreffenden Sollwerts und einen ursprünglichen Höchstwert bei 105 % des Betrags des zutreffenden Sollwerts auf.

In einem Schritt II wird Mehl gewogen und ein entsprechendes Messergebnis empfangen.

In einem Schritt III wird das Messergebnis mit dem ursprünglichen Mindestwert und mit dem ursprünglichen Höchstwert für den Sollwert für die Lebensmittelart "Mehl" verglichen und das Vergleichsergebnis ausgewertet.

Wenn die Auswertung ergibt, dass das Messergebnis in dem Bereich von dem ursprünglichen Mindestwert bis zum ursprünglichen Höchstwert liegt, dann wird in einem Schritt IV das Messergebnis zusammen mit der Lebensmittelart bis zum Beenden des Zubereitungsvorgangs gespeichert. Gleichzeitig oder im Anschluss wird ein nächster Schritt der Zubereitungsvorschrift automatisch eingeleitet.

Wenn die Auswertung ergibt, dass das Messergebnis den ursprünglichen Mindestwert unterschreitet, dann wird in einem Schritt V ein neuer Mindestwert auf der Grundlage des Messergebisses berechnet. Anschließend können das Messergebnis, der ursprüngliche Mindestwert und der neu berechnete Mindestwert zusammen mit einer Aufforderung für den Nutzer angezeigt werden, den neuen berechneten Mindestwert zu bestätigen oder abzulehnen. Beim Erfassen einer Bestätigung wird der neu berechnete Mindestwert zusammen mit der Angabe über die Lebensmittelart "Mehl" gespeichert. Nach Erfassen einer Rückmeldung oder Reaktion auf die Aufforderung wird ein nächster Schritt der Zubereitungsvorschrift automatisch eingeleitet.

Wenn die Auswertung ergibt, dass das Messergebnis den ursprünglichen Höchstwert überschreitet, dann wird in einem Schritt VI ein neuer Höchstwert auf der Grundlage des Messergebisses berechnet. Anschließend können das Messergebnis, der ursprüngliche Höchstwert und der neu berechnete Höchstwert zusammen mit einer Aufforderung für den Nutzer angezeigt werden, den neu berechneten Höchstwert zu bestätigen oder abzulehnen. Beim Erfassen einer Bestätigung wird der neu berechnete Höchstwert zusammen mit der Angabe über die Lebensmittelart "Mehl" gespeichert. Nach Erfassen einer Rückmeldung oder Reaktion auf die Aufforderung wird ein nächster Schritt der Zubereitungsvorschrift automatisch eingeleitet.

Bei der Berechnung eines neuen Mindestwerts oder eines neuen Höchstwerts (Schritte V oder VI) können Erfahrungswerte und / oder Informationen über Nutzervorlieben automatisch abgerufen und berücksichtigt werden.

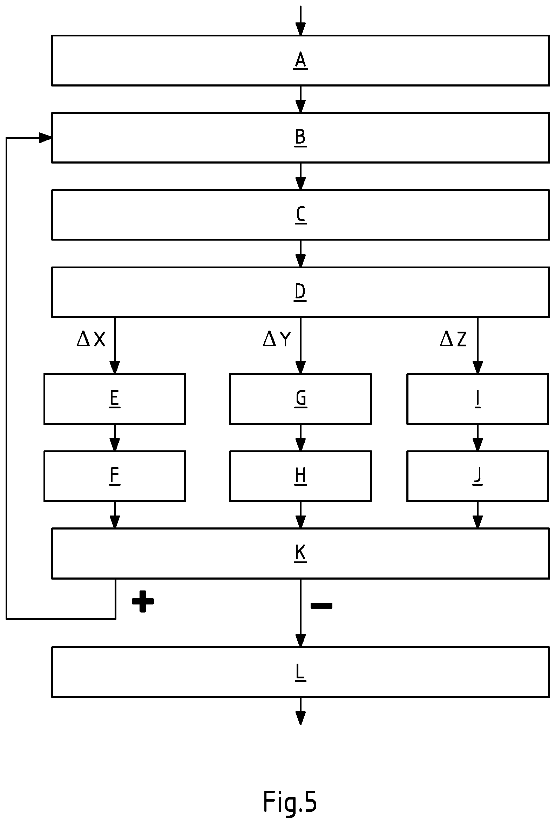

Fig. 5 zeigt ein drittes Ausführungsbeispiel für ein Verfahren zum Betreiben eines Systems zur Verarbeitung von Lebensmitteln entsprechend einer vorgegebenen Zubereitungsvorschrift.

In einem Schritt A wird eine Zubereitungsvorschrift mit Befehlen zum Durchführen eines Zubereitungsvorgangs, beispielsweise zum Zubereiten eines Brotteigs abgerufen. Die Zubereitungsvorschrift weist Informationen auf, die jeweils einer Lebensmittelart bzw. Zutat, "Mehl", "Wasser", "Hefe" entspricht. Jeder Lebensmittelart ist ein Sollwert, hier "X", "Y" oder "Z" zugeordnet, wobei jeder Sollwert mit einem Toleranzbereich mit einem Mindestwert und mit einem Höchstwert angegeben ist. Die Information über die Lebensmittelt, die Sollwerte und die Toleranzbereiche bzw. die Mindestwerte und die Höchstwerte sowie ihre Zuordnungen können beispielsweise in Form einer Tabelle wie hier unten wiedergegeben hinterlegt sein:

| Lebensmittelart | Mindestwert | Sollwert | Höchstwert | Bereits gewogen? |
|---|---|---|---|---|
| Mehl | Xmin | X | Xmax | Nein |
| Wasser | Ymin | Y | Ymax | Nein |
| Hefe | Zmin | Z | Zmax | nein |

Die Informationen über eine Lebensmittelart kann einen Vermerk aufweisen, der angibt, ob die Lebensmittelart bereits erkannt bzw. gewogen worden ist. Der Vermerk kann entsprechend des im Folgenden beschriebenen Verfahrensablaufs modifiziert werden. Alternativ kann am Anfang des Ablaufes kein Vermerk vorhanden sein, jedoch ein Vermerk im Laufe des Verfahrensablaufs hinzugefügt werden. Vorliegend weisen die Lebensmittelarten "Mehle", "Wasser" und "Hefe" am Anfang des Zubereitungsvorgangs bzw. des Verfahrens einen negativen Vermerk zur Frage "bereits gewogen?" auf.

In einem Schritt B wird ein Lebensmittel, beispielsweise Mehl, gewogen und ein entsprechendes Messergebnis empfangen.

In einem Schritt C wird das Messergebnis mit den Sollwerten X, Y und Z verglichen und jeweils ein Unterschied ΔX, ΔY oder ΔZ zwischen dem Messergebnis und dem Sollwert X, Y oder Z berechnet.

In einem Schritt D wird bestimmt, welcher der berechneten ΔX, ΔY oder ΔZ der geringste Betrag aufweist. In Abhängigkeit des Bestimmungsergebnisses wird ein Schritt E, G oder I automatisch eingeleitet.

Der Schritt E wird eingeleitet, wenn im Schritt D bestimmt wurde, dass der Unterschied ΔX zwischen dem Mesergebnis und dem Sollwert X der geringste Beitrag unter den berechneten Unterschieden ΔX, ΔY und ΔZ aufweist. Im Schritt E wird das Messergebnis der Lebensmittelart "Mehl" zugeordnet, und die Lebensmittelart "Mehl" mit einem Vermerk versehen, der angibt, dass "Mehl" bereits gewogen worden ist. Anschließend wird ein Schritt F automatisch eingeleitet. Im Schritt F wird das Messergebnis mit dem Mindestwert Xmin und mit dem Höchstwert Xmax des Toleranzbereichs für die Lebensmittelart "Mehl" vergleichen und ggf. das Ergebnis angezeigt und / oder abgewartet, dass Mehl nachgefüllt wird. Wird im Schritt F festgestellt, dass das Messergebnis in den durch den Mindestwert und den Höchstwert gebildeten Toleranzbereich fällt, dass wird ein Schritt K automatisch eingeleitet.

Der Schritt G wird eingeleitet, wenn im Schritt D bestimmt wurde, dass der Unterschied ΔY zwischen dem Mesergebnis und dem Sollwert Y der geringste Beitrag unter den berechneten Unterschieden ΔX, ΔY und ΔZ aufweist. Im Schritt G wird das Messergebnis der Lebensmittelart "Wasser" zugeordnet, und die Lebensmittelart "Wasser" mit einem Vermerk versehen, der angibt, dass "Wasser" bereits gewogen worden ist. Anschließend wird ein Schritt H automatisch eingeleitet. Im Schritt H wird das Messergebnis mit dem Mindestwert Ymin und mit dem Höchstwert Ymax des Toleranzbereichs für die Lebensmittelart "Wasser" vergleichen und ggf. das Ergebnis angezeigt und / oder abgewartet, dass Wasser nachgefüllt wird. Wird im Schritt G festgestellt, dass das Messergebnis in den durch den Mindestwert und den Höchstwert gebildeten Toleranzbereich fällt, dass wird der Schritt K automatisch eingeleitet.

Der Schritt I wird eingeleitet, wenn im Schritt D bestimmt wurde, dass der Unterschied ΔZ zwischen dem Mesergebnis und dem Sollwert Z der geringste Beitrag unter den berechneten Unterschieden ΔX, ΔY und ΔZ aufweist. Im Schritt I wird das Messergebnis der Lebensmittelart "Hefe" zugeordnet, und die Lebensmittelart "Hefe" mit einem Vermerk versehen, der angibt, dass "Hefe" bereits gewogen worden ist. Anschließend wird ein Schritt J automatisch eingeleitet. Im Schritt J wird das Messergebnis mit dem Mindestwert Zmin und mit dem Höchstwert Zmax des Toleranzbereichs für die Lebensmittelart "Hefe" vergleichen und ggf. das Ergebnis angezeigt und / oder abgewartet, dass Hefe nachgefüllt wird. Wird im Schritt J festgestellt, dass das Messergebnis in den durch den Mindestwert und den Höchstwert gebildeten Toleranzbereich fällt, dass wird ein Schritt K automatisch eingeleitet.

In dem Schritt K wird überprüft, ob eine Lebensmittelart noch keinen Vermerk aufweist, der angibt, dass diese bereits gewogen worden ist. Liegt eine Lebensmittelart vor, die noch nicht gewogen worden ist bzw. die keinen solchen Vermerk aufweist, dann wird das Verfahren ab Schritt B wiederdurchgeführt, bis festgesellt wird, dass alle in der Zubereitungsschriften angegeben Lebensmittelarten gewogen worden sind bzw. einen Vermerk, der angibt, dass diese bereits gewogen worden ist, aufweisen. Dann wird ein Schritt L automatisch eingeleitet, wobei der Schritt L einem nächsten Schritt der Zubereitungsvorschrift entspricht, beispielsweise ein Verarbeitungsschritt zum Vermengen, Zerkleinern oder Heizen der Zutaten.

Ggf. sieht das Verfahren vor, dass das Wiegen einer in der Zubereitungsvorschrift vorgesehene Lebensmittelart übersprungen wird, beispielsweise aufgrund einer Nutzereingabe.

Insgesamt können durch das beschriebene Verfahren Zutaten automatisch erkannt und in einer beliebigen Reihenfolge eingegeben bzw. gewogen werden, und dabei den Aufwand für den Nutzer geringgehalten werden. Somit bietet das Verfahren bzw. eine Vorrichtung mit entsprechenden Mitteln zur Durchführung des Verfahrens eine gesteigerte Nutzerfreundlichkeit.

## Patentansprüche

1. System (100, 200) zur Verarbeitung von Lebensmitteln,
- mit einem Aufnahmebereich (106, 218) zum Aufnehmen von Lebensmitteln,
- mit einer Wiegeeinrichtung (108, 216) und
- mit einer Steuereinrichtung (110, 210),
- wobei die Steuereinrichtung (110, 210) dazu eingerichtet ist, auf einen Datenspeicher (112, 220) mit Befehlen zum Durchführen mindestens eines Zubereitungsvorgangs entsprechend einer Zubereitungsvorschrift zuzugreifen, und
- wobei die Wiegeeinrichtung (108, 216) dazu eingerichtet ist, ein in dem Aufnahmebereich (106, 218) aufgenommenes Lebensmittel zu wiegen und ein entsprechendes Messergebnis an die Steuereinrichtung (110, 210) zu übermitteln,
**dadurch gekennzeichnet,**
- **dass** die Steuereinrichtung (110, 210) dazu eingerichtet ist, das Messergebnis mit mindestens einem Sollwert zu vergleichen, wobei der Sollwert mit einem Toleranzbereich angegeben ist, und
- **dass** die Steuereinrichtung (110, 210) dazu eingerichtet ist, einen nächsten Schritt der Zubereitungsvorschrift in Abhängigkeit von dem Vergleichsergebnis automatisch einzuleiten.

2. System (100, 200) nach Anspruch 1,
**dadurch gekennzeichnet,**
- **dass** der mindestens eine Sollwert durch die Zubereitungsvorschrift vorgegeben ist, wobei die Zubereitungsvorschrift den Einsatz von mindestens zwei Lebensmitteln vorsieht, und wobei der Sollwert einem der mindestens zwei Lebensmittel zugeordnet sind, und
- **dass** die Steuereinrichtung (110, 210) dazu eingerichtet ist, ein Lebensmittel aus der Zubereitungsvorschrift in Abhängigkeit von dem Vergleichsergebnis automatisch zu erkennen.

3. System (100, 200) nach einem der voranstehenden Ansprüche,
**dadurch gekennzeichnet,**
- **dass** der nächste Schritt der Zubereitungsvorschrift, der automatisch eingeleitet wird, ein Warteschritt, ein Verarbeitungsschritt, ein Wiegeschritt oder ein Tarierschritt ist.

4. System (100, 200) nach einem der voranstehenden Ansprüche,
**dadurch gekennzeichnet,**
- **dass** der Toleranzbereich mit einem Mindestwert und mit einem Höchstwert angegeben ist,
- **dass** die Steuereinrichtung (110, 210) dazu eingerichtet ist, den Mindestwert und den Höchstwert jeweils mit einem Abstand relativ zu dem Sollwert automatisch zu bestimmen, und
- **dass** der Abstand von dem Betrag des Sollwerts abhängig ist.

5. System (100, 200) nach einem der voranstehenden Ansprüche,
**dadurch gekennzeichnet,**
- **dass** die Steuereinrichtung (110, 210) dazu eingerichtet ist, den Mindestwert mit einem ersten Abstand relativ zu einem Sollwert und den Höchstwert mit einem zweiten Abstand relativ zum Sollwert automatisch zu bestimmen,
- wobei der erste Abstand und der zweite Abstand unterschiedliche Beträge aufweisen.

6. System (100, 200) nach einem der voranstehenden Ansprüche,
**dadurch gekennzeichnet,**
- **dass** die Steuereinrichtung (110, 210) dazu eingerichtet ist, wenn das Vergleichsergebnis einem Überschreiten des Sollwerts über den Toleranzbereich hinaus, insbesondere einem Überschreiten des Höchstwerts, entspricht, automatisch einen Warteschritt mit einer vorgegebenen Wartezeit einzuleiten, und nach Ablauf der vorgegebenen Wartezeit ein dann durch die Wiegeeinrichtung (108, 216) weiteres übermitteltes Messergebnis mit dem Sollwert zu vergleichen und einen nächsten Schritt des Zubereitungsvorgangs in Abhängigkeit von dem weiteren Vergleichsergebnis automatisch einzuleiten, und / oder
- **dass** die Steuereinrichtung (110, 210) dazu eingerichtet ist, wenn das Vergleichsergebnis einem Unterschreiten des Sollwerts über den Toleranzbereich hinaus, insbesondere einem Unterschreiten des Mindestwerts, entspricht, automatisch einen Warteschritt mit einer vorgegebenen Wartezeit einzuleiten, und nach Ablauf der vorgegebenen Wartezeit ein dann durch die Wiegeeinrichtung (108, 216) weiteres übermitteltes Messergebnis mit dem Sollwert zu vergleichen und einen nächsten Schritt des Zubereitungsvorgangs in Abhängigkeit von dem weiteren Vergleichsergebnis automatisch einzuleiten.

7. System (100, 200) nach einem der voranstehenden Ansprüche,
**dadurch gekennzeichnet,**
- **dass** eine Benutzerschnittstelle (114, 212) vorgesehen ist,
- wobei die Benutzerschnittstelle (114, 212) dazu eingerichtet ist, ein Signal in Abhängigkeit von dem Vergleichsergebnis auszugeben.

8. System (100, 200) nach einem der voranstehenden Ansprüche,
**dadurch gekennzeichnet,**
- **dass** die Steuereinrichtung (110, 210) dazu eingerichtet ist, einen nächsten Schritt der Zubereitungsvorschrift automatisch einzuleiten und das Messergebnis zusammen mit einer Angabe über die Lebensmittelart des gewogenen Lebensmittels zu hinterlegen, wenn das Vergleichsergebnis ergibt, dass das Messergebnis gleich oder höher als der Mindestwert und gleich oder kleiner als der Höchstwert ist.

9. System (100, 200) nach einem der voranstehenden Ansprüche,
**dadurch gekennzeichnet,**
- **dass** die Steuereinrichtung (110, 210) Teil eines ersten Küchengeräts (202) ist, und
- **dass** der Aufnahmebereich (106, 218) zum Aufnehmen von Lebensmitteln und die Wiegeeinrichtung (108, 216) Teile eines zweiten Küchengeräts (204) sind.

10. Verfahren zum Betreiben eines Systems zur Verarbeitung von Lebensmitteln entsprechend einer vorgegebenen Zubereitungsvorschrift, insbesondere eines Systems (100, 200) nach einem der voranstehenden Ansprüche,
- bei dem ein Lebensmittel gewogen und ein entsprechendes Messergebnis empfangen wird,
- bei dem das Messergebnis mit mindestens einem Sollwert verglichen wird, wobei der Sollwert mit einem Toleranzbereich angegeben ist, und
- bei dem ein nächster Schritt der Zubereitungsvorschrift in Abhängigkeit von dem Vergleichsergebnis automatisch eingeleitet wird.

11. Verfahren nach Anspruch 10,
**dadurch gekennzeichnet,**
- **dass** der mindestens eine Sollwert durch die Zubereitungsvorschrift vorgegeben ist, wobei die Zubereitungsvorschrift den Einsatz von mindestens zwei Lebensmitteln vorsieht, und wobei der Sollwert einem der mindestens zwei Lebensmittel zugeordnet ist, und
- **dass** ein Lebensmittel aus der Zubereitungsvorschrift in Abhängigkeit von dem Vergleichsergebnis automatisch erkannt wird.

12. Verfahren nach einem der voranstehenden Ansprüche,
**dadurch gekennzeichnet,**
- **dass** der Toleranzbereich automatisch bestimmt wird, indem ein Mindestwert mit einem ersten Abstand relativ zu dem Sollwert und ein Höchstwert mit einem zweiten Abstand relativ zu dem Sollwert automatisch bestimmt werden, wobei der erste Abstand und der zweite Abstand gleich sind,
oder
- **dass** der Toleranzbereich automatisch bestimmt wird, indem ein Mindestwert mit einem ersten Abstand relativ zu dem Sollwert und ein Höchstwert mit einem zweiten Abstand relativ zu dem Sollwert automatisch bestimmt werden, wobei der erste Abstand und der zweite Abstand unterschiedliche Beträge aufweisen.

13. Verfahren nach Anspruch 12,
**dadurch gekennzeichnet,**
- **dass** der Mindestwert und der Höchstwert in Abhängigkeit von dem Betrag des Sollwerts, in Abhängigkeit von Erfahrungswerten und / oder in Abhängigkeit von Nutzervorlieben automatisch bestimmt werden.

14. Verfahren nach einem der voranstehenden Ansprüche,
**dadurch gekennzeichnet,**
- **dass**, wenn das Vergleichsergebnis einem Überschreiten des Sollwerts über den Toleranzbereich hinaus, insbesondere einem Überschreiten des Höchstwerts, entspricht, ein Warteschritt mit einer vorgegebenen Wartezeit automatisch eingeleitet wird, und nach Ablauf der vorgegebenen Wartezeit ein dann übermitteltes weiteres Messergebnis mit dem Sollwert verglichen wird und ein nächster Schritt der Zubereitungsvorschrift in Abhängigkeit von dem weiteren Vergleichsergebnis automatisch eingeleitet wird,
und / oder
- **dass**, wenn das Vergleichsergebnis einem Unterschreiten des Sollwerts über den Toleranzbereich hinaus, insbesondere einem Unterschreiten des Mindestwerts, entspricht, ein Warteschritt mit einer vorgegebenen Wartezeit automatisch eingeleitet wird, und nach Ablauf der vorgegebenen Wartezeit ein dann übermitteltes weiteres Messergebnis mit dem Sollwert verglichen wird und ein nächster Schritt der Zubereitungsvorschrift in Abhängigkeit von dem weiteren Vergleichsergebnis automatisch eingeleitet wird.

15. Verfahren nach einem der voranstehenden Ansprüche,
**dadurch gekennzeichnet,**
- **dass** bei dem automatischen Einleiten des nächsten Schrittes der Zubereitungsvorschrift in Abhängigkeit von dem Vergleichsergebnis keine Nutzereingabe aufgefordert wird.
